# EUROPÄISCHE PATENTSCHRIFT

(11) **EP 1 683 697 B1**
(45) Veröffentlichungstag und Bekanntmachung des Hinweises auf die Patenterteilung: **18.07.2007**
(21) Anmeldenummer: 05026335.9
(22) Anmeldetag: 02.12.2005
(51) Int. Cl.: B60W 10/02, B60W 10/18, B60W 30/18

(54) **Verfahren zur Anfahrsteuerung eines Kraftfahrzeuges**
Method for drive-off control of a vehicle
Procédé de commande du démarrage d'un véhicule automobile

(30) Priorität: 13.01.2005 DE 102005001550
(43) Veröffentlichungstag der Anmeldung: 26.07.2006
(73) Patentinhaber: ZF FRIEDRICHSHAFEN AG, 88038 Friedrichshafen (DE)
(72) Erfinder: Reith, Ulrich, 88281 Schlier (DE)

(56) Entgegenhaltungen:
- EP-A- 1 258 386
- EP-A- 1 327 566
- DE-A1- 19 958 076

## Beschreibung

Die Erfindung betrifft ein Verfahren zur Steuerung eines Anfahrvorganges eines Kraftfahrzeuges gemäß dem Oberbegriff des Patentanspruchs 1, siehe EP-A-1 327 566.

Um ein Wegrollen eines stehenden Kraftfahrzeugs auf einer in Fahrzeuglängsrichtung nicht waagerechten Fläche zu verhindern, ist es üblich, die Fahrzeugbremsen zu betätigen. Aus dem Stand der Technik ist eine Vielzahl von Verfahren bekannt, die ein unbeabsichtigtes Wegrollen eines stehenden Kraftfahrzeugs verhindern sollen. Üblicherweise wird dazu mittels eines durch ein Steuergerät ansteuerbaren Aktuators eine Bremskraft an zumindest einer Radbremse erzeugt und aufrecht erhalten. Soll das Fahrzeug bewegt werden, so ist diese automatische Bremsung aufzuheben. Genügt dabei das vom Antriebsmotor über die Kupplung und den Getriebestrang an die Räder weitergeleitete Motormoment nicht, um ein unbeabsichtigtes Wegrollen des Fahrzeugs in Richtung der Neigung der Fläche zu verhindern, so kann es zu gefährlichen Situationen kommen. Werden die Bremsen jedoch zu spät gelöst, so wird ein unnötig großes Drehmoment gegen die Fahrzeugbremsen aufgebracht, welches zu erhöhtem Verschleiß, vermehrtem Kraftstoffverbrauch und unnötigen Emissionen an Schadstoffen und Geräuschen führt.

Aus der DE 102 44 024 A1 ist ein Verfahren zum Verhindern eines unbeabsichtigten Wegrollens eines stillstehenden Fahrzeugs bekannt, welches bei einer aktivierten Haltefunktion gegen ein unbeabsichtigtes Wegrollen die Bremse in Abhängigkeit vom Kupplungsstellweg einer manuell oder automatisch betätigten Kupplung löst. Der Kupplungsstellweg, bei dessen Erreichen die Bremse gelöst wird, ist dabei entweder fest vorgegeben oder wird anhand von ermittelten Werten für Fahrzeuggewicht und momentaner Steigung der Fahrbahn berechnet.

Bei Fahrzeugen mit automatisch betätigbarer Anfahrkupplung wird die Betätigungsstetlung der Kupplung während eines Anfahrvorganges von der Stellung und eventuell der Bewegungsgeschwindigkeit des Fahrpedals bestimmt. Betätigt der Fahrer das Fahrpedal schnell bzw. langsam und wird das Fahrpedal weit oder weniger weit ausgelenkt, so folgt daraus bei einigen Steuerungssystemen jeweils ein unterschiedliches Motormoment zu dem Zeitpunkt, in dem ein vorgegebener Kupplungsstellweg erreicht wird. Das Lösen der Bremse bei Erreichen des vorbestimmten Kupplungsstellweges geschieht nach Ausgabe des Signals zum Lösen der Bremse mit einer gewissen Zeitverzögerung: Dadurch kann bei diesem Verfahren der Antriebsmotor zum Zeitpunkt des Lösens der Bremse je nach Auslenkgeschwindigkeit und Auslenkwinkel des Fahrpedals unterschiedlich große Antriebsmomente auf die Räder übertragen. Es ist dementsprechend möglich, dass das Fahrzeug unbeabsichtigt wegrollt oder auch unbeabsichtigt schnell beschleunigt, weil zum Zeitpunkt des Lösens der Bremsen ein zu geringes oder zu großes Drehmoment auf die Räder wirkt.

Bei anderen Steuerungssystemen für automatisierte Schaltgetriebe und automatisch gesteuerte Kupplungen wird der Antriebsmotor zunächst auf ein bestimmtes Motormoment beziehungsweise eine bestimmte Motordrehzahl begrenzt. Von verschiedenen Fahrpedaistellungen abhängig wird dann in erster Linie die Einrückgeschwindigkeit der Kupplung und/oder die Geschwindigkeit der Momenten- und Drehzahlfreigabe auf den Leistungswunsch des Fahrers verändert.

Aus der DE 101 05 749 A1 ist ein Verfahren zur Erleichterung des Rangierens eines Nutzfahrzeuges bei geringer Geschwindigkeit bekannt, bei welchem in einem Rangiermodus in Abhängigkeit von der Stellung eines Fahrpedals und des Beladungszustandes des Fahrzeugs die Betriebsreibungsbremse und die Kupplung gleichzeitig und auf einander abgestimmt betätigt werden. In diesem speziellen Betriebszustand wird bei zunehmender Auslenkung des Fahrpedals der Bremsdruck verringert und gleichzeitig der Kupplungsweg in Richtung einer geschlossenen Kupplung verändert. Das Verhältnis zwischen Fahrpedalstellung, Bremsdruck und Kupplungsweg ist dabei jedoch vom erfassten Beladungszustand des Fahrzeugs abhängig.

Der Rangierbetrieb ist ein spezieller Fahrmodus, der vom Fahrer insbesondere bei Nutzfahrzeugen in Form von Spezialgängen gewählt wird und mit dem Anfahrbetrieb nicht zu vergleichen ist. Im Rangiermodus kommt es erklärtermaßen auf eine exakte Positionierung des Fahrzeugs an, wobei bewusst in Kauf genommen wird, dass der Antriebsmotor bei schleifender Kupplung gegen eine betätigte Bremse arbeitet. Gerade dieser Betriebszustand, der bei einer Rangierhilfe das genaue Positionieren des Fahrzeugs erst ermöglicht, soll jedoch bei einer Anfahrhilfe auf einen möglichst kurzen Zeitraum bzw. auf eine möglichst geringe Arbeit des Antriebsmotors gegen die Bremse reduziert werden.

Aus der DE 44 21 088 C2 ist eine Anfahrhilfsvorrichtung für ein Fahrzeug mit Automatikgetriebe bekannt, bei dem ein Steuergerät bei niedriger Geschwindigkeit, gleichzeitiger Betätigung der Betriebsbremseinrichtung oder der Feststellbremseinrichtung und gleichzeitiger Nullstellung des Fahrpedals die Feststellbremse aktiviert. Bei Wegfall einer dieser Bedingungen wird die Feststellbremse nach einer Verzögerungszeit wieder deaktiviert. Wird ein derartig ausgerüstetes Fahrzeug an einem Hang gestoppt und die Anfahrhilfseinrichtung aktiviert, so wird nach Entlastung des Bremspedals bzw. der Feststellbremse und/oder nach der Betätigung des Fahrpedals die Bremse noch für eine kurze Zeit in aktiviertem Zustand belassen.

Dieses Verfahren verhindert also nicht ein unbeabsichtigtes Wegrollen des Fahrzeugs, sondern sorgt lediglich für eine kurze Verzögerung bei dem Lösen der Bremse, welches dem Fahrer das Wechseln vom Bremspedal auf das Fahrpedal ermöglichen soll. Wird nach Ablauf dieser Zeitspanne durch den Motor kein ausreichendes Drehmoment bereitgestellt, um das Fahrzeug zumindest in der vorherigen Position zu halten, oder wird die Kupplung bis zu diesem Zeitpunkt nicht weit genug geschlossen, so rollt das Fahrzeug unbeabsichtigt in Richtung der Straßenneigung. Zudem birgt dieses Verfahren eine erhebliche Gefahr, wenn ein Fahrer wie gewohnt anfahren möchte und bei Betätigung des Fahrpedals und, im Falle des Anfahrens am Berg, bei vorsichtiger Entlastung des Bremspedals oder der Feststellbremse nicht die gewünschte Wirkung eintritt. In diesem Fall wird er das Fahrpedal instinktiv weiter durchtreten und/oder das Bremspedal oder die Feststellbremse weiter lösen und anschließend bei sich automatisch und zeitverzögert lösender Bremse von der hohen bereitgestellten Antriebsleistung überrascht.

Zudem ist aus der DE 198 48 448 A1 eine Bremsdruck-Steuerungseinrichtung bekannt, welche bei stehendem Fahrzeug und nach Aktivierung eines Betriebsmodus "Anfahrassistent" durch den Fahrer dafür sorgt, dass die Bremse des Fahrzeugs für eine gewisse Zeitspanne mit Bremsdruck beaufschlagt wird. Dies soll es dem Fahrer ermöglichen, auf das Fahrpedal überzuwechseln. Ein Anfahrwunsch des Fahrers wird angenommen, wenn die Kupplung geöffnet ist, das Bremspedal nicht betätigt wird und gleichzeitig das Fahrpedal betätigt wird. In diesem Fall wird die Kupplung gemäß einem vorgegebenen Verlauf gesteuert. Sobald der Kupplungsstellweg einen Schwellwert überschritten hat, der einer Übertragungsfähigkeit der Kupplung entspricht, wird der Anfahrassistent abgeschaltet und die Bremse damit gelöst. Es ist vorgesehen, dass der Schwellwert für den Kupplungsweg in Abhängigkeit von Motorlast oder Kupplungsverschleiß angepasst wird.

Der in der DE 198 48 448 A1 beschriebene Bremsassistent verwendet das Signal des Fahrpedals also lediglich zur Erkennung des Anfahrwunsches, wobei nur die Überschreitung eines festgelegten Schwellwertes überwacht wird. Der weitere Verlauf des Anfahrvorganges und insbesondere der Zeitpunkt des Lösens der Bremse ist nicht von der Stellung des Fahrpedals sondern allenfalls von der Motorlast abhängig, welche einen Einfluss auf die Größe des Kupplungsstellweges haben kann, bei dessen Erreichung die Bremse gelöst wird. Tritt der Fahrer das Fahrpedal weit durch, so erfolgt zwar eine entsprechende Reaktion des Motors in Form einer stark angehobenen Drehzahl. Da die Kupplung jedoch gemäß eines vorgegebenen Verlaufes gesteuert wird, ist die Motorlast aber nicht von der Stellung des Fahrpedals, sondern von der Übertragungsfähigkeit der Kupplung bestimmt. Die Ermittlung der Motorlast stellt damit lediglich eine genauere, aber auch sehr aufwändige Methode zur Bestimmung desjenigen Kupplungsstellweges dar, bei welchem das Signal zur Aufhebung der Bremswirkung gegeben wird.

Auch hier wird der Auslenkweg und die Auslenkgeschwindigkeit des Fahrpedals nicht ausgewertet. Da jedoch stets eine gewisse Reaktionszeit benötigt wird, um nach Erteilung des Befehls zum Lösen der Bremse die Bremswirkung an den Rädern auch tatsächlich aufzuheben, kann mit diesem bekannten Verfahren nicht sicher vorhergesagt werden, welches Antriebsmoment zum Zeitpunkt des vollständigen Schließens des Kraftweges vom Motor zu den Rädern des Fahrzeugs an diesen anliegt. Wird das Fahrpedal schnell und weit durchgetreten, so steigt die Motorleistung in dem Zeitraum zwischen Erteilung des Befehls zum Lösen der Bremse und dem Wirksamwerden des Befehls sehr viel stärker an, als wenn das Fahrpedal nur wenig und langsam ausgelenkt wird. Auch dieses Verfahren ist daher nicht in der Lage sicher zu stellen, dass der Befehl zum Lösen der Bremse zu einem unter Berücksichtigung der Verzögerungszeit von der Ausgabe bis zum Wirksamwerden des Befehls optimalen Zeitpunkt gegeben wird.

Beispielsweise bei pneumatischen Aktuatoren weichen die Sollvorgabe für die Verstellgeschwindigkeit der Kupplung und die tatsächlich erzeugte physikalische Größe teilweise deutlich voneinander ab. Aber auch beim Antriebsmotor kann nicht davon ausgegangen werden, dass eine Drehzahl- oder Drehmomentvorgabe mit der erwarteten Dynamik und/oder Güte in Ist-Werte umgesetzt wird. So könnten beispielsweise höher priorisierte Steuerungseingriffe in den Antriebsstrang eines Fahrzeuges (zum Beispiel durch ein Bremsensteuergerät) die Motorsteuerung zu einer Abweichung von den Anforderungen einer Anfahrsituation veranlassen.

Vor diesem Hintergrund liegt der Erfindung die Aufgabe zugrunde, ein Steuerungsverfahren für einen Anfahrassistenten für ein Fahrzeug mit einem Getriebe und einer automatisch betätigbaren Fahrkupplung vorzustellen, bei welchem der Zeitpunkt für die Ausgabe des Befehls zum Lösen der Bremse besser auf das zum Zeitpunkt des Wirksamwerdens des Befehls anliegende Motordrehmoment abgestimmt ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass zwischen der Ausgabe eines Befehls zum Lösen der Bremse und der tatsächlichen Reduzierung und Aufhebung der Bremswirkung eine gewisse Reaktionszeit vergeht, die im Folgenden Totzeit genannt werden soll. Da das bis zum Wirksamwerden des Befehls zum Lösen der Bremse sich einstellende Antriebsdrehmoment des Antriebsmotors des Fahrzeugs von der Geschwindigkeit der Auslenkung und dem Betrag der Auslenkung des Fahrpedals abhängig ist, soll der Zeitpunkt der Ausgabe des Befehls zum Lösen der Bremse im wesentlichen in Abhängigkeit von dem Auslenkweg des Fahrpedals und/oder von der Auslenkgeschwindigkeit des Fahrpedals gesteuert werden.

Demnach geht die Erfindung aus von einer Steuerung eines Anfahrassistenten für ein Fahrzeug mit einem Getriebe, mit einer automatisch steuerbaren Kupplung und einer zumindest auf ein Rad des Fahrzeugs wirkenden automatisch ansteuerbaren Bremse, welche bei Stillstand des Fahrzeugs auch unabhängig von einer Betätigung einer Betriebs- oder Feststellbremse durch den Fahrer automatisch oder manuell ausgelöst aktiviert werden kann. Unter Rad wird hierbei allgemein ein die Bewegung des Fahrzeuges gegenüber dem Untergrund ermöglichendes und mit diesem in Kontakt stehendes Element wie beispielsweise ein Rad oder auch eine Raupenkette verstanden. Die Erfindung geht weiter aus von einer Anfahrassistenzsteuerung, welche bei Aktivierung eines Betriebsmodus zum Anfahren den Einrückungsgrad der Kupplung erhöht und die zumindest eine Bremse löst.

Zur Lösung der gestellten Aufgabe ist zudem vorgesehen, dass die Anfahrassistenzsteuerung derart betrieben wird, dass derjenige Einrückgrad der Kupplung, ab dem signalisiert wird, dass die Bremse gelöst werden soll, abhängig von der aus der aktuellen Fahrpedalstellung und/oder Fahrpedalverstellgeschwindigkeit abgeleiteten Betätigungsreaktionen von Antriebsstrangaktuatoren gewählt wird.

Demnach besteht der Kern der Erfindung darin, dass nicht nur die Fahrpedalbetätigung direkt, sondern auch die aus der Fahrpedalbetätigung und/oder Fahrpedalverstellgeschwindigkeit abgeleiteten Reaktionen verschiedener Antriebsstrangaktuatoren von beispielsweise Kupplung und Antriebsmotor auf diesbezügliche Steuerungsbefehle beobachtet und in die Bremssteuerung einbezogen werden.

Auf diese Weise kann der Zeitpunkt des Lösens der Bremse so bestimmt werden, dass unter Berücksichtigung der Totzeit zu diesem Zeitpunkt das Antriebsdrehmoment des Antriebsmotors auf die Räder des Fahrzeugs gerade dem gewünschten Antriebsdrehmoment entspricht.

Insbesondere kann der Zeitpunkt für die Ausgabe des Befehls zum Lösen der Bremse so gewählt werden, dass zum Zeitpunkt des Wirksamwerdens des Motorantriebsdrehmomentes an den Rädern des Fahrzeugs das dort anliegende Antriebsdrehmoment gerade dem jeweiligen Drehmoment entspricht, welches benötigt wird, um ein unbeabsichtigtes Rollen des Fahrzeugs in Richtung einer Neigung des Untergrundes des Fahrzeugs zu verhindern. Alternativ dazu kann der Zeitpunkt zur Ausgabe des Befehls zum Lösen der Bremse so gewählt werden, dass unter Berücksichtigung der Totzeit zum Zeitpunkt des Wirksamwerdens des Befehls an den Rädern ein darüber hinausgehendes gewünschtes Anfangsdrehmoment anliegt, welches eine gewünschte Beschleunigung des Fahrzeugs zur Folge hat.

Gemäß einer bevorzugten Variante der Erfindung wird zur Bestimmung des oben genannten Einrückgrades der Kupplung, ab dem signalisiert wird, dass die Bremse gelöst werden soll, die Betätigungsreaktion eines Kupplungsaktuators auf die Vorgabe eines Kupplungsbetätigungssollwertes ausgewertet, der eine Stellgeschwindigkeit oder ein Stellweg sein kann.

Zusätzlich kann auch die Betätigungsreaktion eines Motoraktuators auf einen Motorbetätigungssollwert ausgewertet werden, wobei dieser eine Motordrehzahl oder ein Motordrehmoment sein kann.

In einer weiteren bevorzugten Ausführungsform der Erfindung kann vorgesehen sein, dass bei der Bestimmung des Einrückungsgrades der Kupplung, ab dem der Befehl zur Lösung der Bremse gegeben wird, zusätzlich das aktuelle Getriebeübersetzungsverhältnis (also etwa eine eingelegte Getriebestufe) berücksichtigt wird. Da bei Fahrzeugen mit einem manuell oder automatisch unter mehreren Möglichkeiten wählbaren Getriebegang zum Anfahren das an den Rädern anliegende Drehmoment von dem gewählten Getriebegang abhängig ist, kann auf diese Weise auch bei einem Anfahren in verschiedenen Gängen der Zeitpunkt für die Ausgabe des Befehls zum Lösen der Bremse unter Berücksichtigung der Totzeit individuell so gewählt werden, dass zum Zeitpunkt des Wirksamwerdens des Antriebsmomentes an den Rädern des Fahrzeugs das gewünschte Drehmoment anliegt.

Gemäß einer anderen Variante des Verfahrens kann vorgesehen sein, dass zusätzlich eine Information über eine berechnete, gemessene oder eingegebene Fahrzeugmasse mit in die Bestimmung desjenigen Einrückungsgrades der Kupplung eingeht, ab dem signalisiert wird, dass die Bremse gelöst werden soll. Bei steigender Masse des Fahrzeugs steigt sowohl die Kraft, welche auf einer schrägen Abstellfläche auf das Fahrzeug in Richtung der Neigung der Fläche einwirkt und ein unerwünschtes Wegrollen des Fahrzeugs verursachen kann, als auch das zur Erzielung einer gewünschten Anfahrbeschleunigung benötigte Drehmoment.

Die Berücksichtigung der Masse kann dabei im einfachsten Fall durch eine manuelle Eingabe, zum Beispiel durch einen Schalter mit mehreren Schaltstufen, durch ein kontinuierlich veränderbares Einstellmittel oder durch eine numerische Eingabe erfolgen. In einer vorteilhaften Ausgestaltung kann die Masse des Fahrzeugs jedoch gemessen oder berechnet werden. Hierzu sind eine Vielzahl von Verfahren möglich. Beispielsweise kann das Signal aus dem Federweg oder aus Kraftsensoren im Bereich des Fahrwerks bekannt sein. Alternativ kann auch das Verhältnis von Beschleunigung und dafür benötigter Kraftstoffmenge ausgewertet werden, wobei auch Informationen über die Steigung ausgewertet werden können. Schließlich lässt sich aus der Bremskraft, welche minimal benötigt wird, um das Fahrzeug auf einer schiefen Ebene zu halten, die Masse abschätzen.

Für das Anfahren auf einer nicht waagerechten Fläche ist es vorteilhaft, wenn zusätzlich eine Information über eine aus einem nicht waagerechten Fahrzeuguntergrund resultierende Kraft auf das Fahrzeug mit in die Bestimmung des Einrückungsgrades der Kupplung eingeht, ab dem signalisiert wird, dass die Bremse gelöst werden soll. Je stärker der Untergrund entgegen der Fahrtrichtung geneigt ist, desto größer ist das Drehmoment, welches zum Zeitpunkt des Wirksamwerdens des Befehls zum Lösen der Bremsen durch den Antriebsmotor bereitgestellt werden muss, um ein Wegrollen zu verhindern. Bei einer Neigung in Fahrtrichtung ist das für eine gewünschte Anfangsbeschleunigung aufzubringende Drehmoment entsprechend geringer. Die aus der Neigung des Untergrundes resultierende Kraft kann beispielsweise aus den Informationen eines Neigungssensors und der Fahrzeugmasse ermittelt werden, oder auch durch die Bestimmung der Bremskraft, welche minimal benötigt wird, um das Fahrzeug am Hang zu halten.

Gemäß einer anderen Variante des Verfahrens kann vorgesehen sein, dass zusätzlich eine Information über das Vorliegen eines Anhängerbetriebes und/oder über die Masse eines Anhängers mit in die Bestimmung des jeweiligen Einrückungsgrades der Kupplung eingeht, ab dem signalisiert wird, dass die Bremse gelöst werden soll. Beim Anhängerbetrieb steigt aufgrund der Masse des Anhängers sowohl die Kraft, welche auf einer schrägen Abstellfläche auf das Fahrzeug einwirkt und ein unerwünschtes Wegrollen des Fahrzeugs verursachen kann, als auch das zur Erzielung einer gewünschten Anfahrbeschleunigung benötigte Drehmoment.

Die Berücksichtigung des Anhängerbetriebs kann dabei im einfachsten Fall durch ein digitales Signal erfolgen, welches beispielsweise aus einer automatischen Erkennung des Anhängers oder auch durch eine manuelle Eingabe zum Beispiel durch einen Schalter erfolgen kann. Als automatische Erkennung eines am Fahrzeug angekuppelten Anhängers wird auch diejenige Variante verstanden, in der ein dem Anhänger zugeordnetes Steuergerät über ein CAN-Bus-System, ein an sich bekanntes elektronisches Netzwerk, allen angeschlossenen Geräten bekannt gibt, dass dieser Anhänger mit dem Fahrzeug verbunden ist.

In einer vorteilhaften Ausgestaltung kann das Signal eine Information darüber enthalten, wie groß die Masse des Anhängers beziehungsweise die daraus resultierende Kraft in Richtung einer schrägen Abstellfläche ist. Dies kann einerseits in Form einer Eingabevorrichtung geschehen, in die die Information durch Eingabe eines Wertes oder durch Auswahl einer Gewichtsklasse eingegeben wird. Besonders vorteilhaft ist es jedoch, wenn die an einer Anhängerkupplung des Fahrzeugs beziehungsweise an der Auflagestelle eines Sattelaufliegers wirkende Kraft in Fahrtrichtung bzw. entgegen der Fahrtrichtung ermittelt wird. Auf diese Weise kann der Zeitpunkt für die Ausgabe des Signals zum Beispiel auch dann korrekt ermittelt werden, wenn das Zugfahrzeug auf einer ebenen Fläche steht, der Anhänger aber gleichzeitig auf einer Rampe oder sonstigen schrägen Fläche steht.

Aus dem Auslenkweg des Fahrpedals und/oder aus der Geschwindigkeit der Auslenkung eines Fahrpedals kann bei bekannter Totzeit abgeschätzt werden, wie groß das Motormoment bei Wirksamwerden des Befehls zum Lösen der Bremse sein wird, bzw. wann der Befehl zum Lösen der Bremse gegeben werden muss, damit unter Berücksichtigung der Totzeit zum Zeitpunkt des Wirksamwerdens des Befehls zum Lösen der Bremse das gewünschte Drehmoment an den Rädern anliegt. Entsprechend kann der Einrückgrad der Kupplung festgelegt werden, bei dem der Befehl zum Lösen der Bremse erteilt wird. Falls jedoch das berechnete, gemessene oder abgeschätzte Drehmoment an der Getriebeeingangswelle zur Verfügung steht, kann dieses vorteilhaft mit in die Bestimmung des Einrückungsgrades der Kupplung eingehen, ab dem signalisiert wird, dass die Bremse gelöst werden soll.

Um die Genauigkeit des vorgestellten Verfahrens weiter zu erhöhen, kann zusätzlich vorgesehen sein, dass eine Information über das Nettodrehmoment des Antriebsmotors, berechnet aus dem Bruttodrehmoment des Antriebsmotors abzüglich der Drehmomentanteile für Nebenantriebe und andere nicht vortriebswirksame Antriebsleistungsverbraucher, mit in die Bestimmung desjenigen Einrückungsgrades der Kupplung eingeht, ab dem signalisiert wird, dass die Bremse gelöst werden soll.

Eine weitere diesbezügliche Verbesserung wird dadurch erreicht, dass zusätzlich eine Information über die tatsächlich benötigte Bremskraft an den Antriebsrädern des Fahrzeugs mit in die Bestimmung des genannten Kupplungseinrückungsgrades eingeht. Diese tatsächlich benötigte Bremskraft an den Antriebsrädern kann dabei beispielsweise von Sensoren an den Bremsvorrichtungen der Fahrzeugräder ermittelt werden.

Da das Drehmoment an der Getriebeeingangswelle bei entsprechender Übertragungsfähigkeit der Kupplung und des Getriebes direkt an den Rädern des Fahrzeugs wirksam wird, kann deren momentaner Wert nicht zur direkten Ausgabe des Befehls zum Lösen der Bremse verwendet werden, da in diesem Fall die Totzeit nicht berücksichtigt werden könnte. Mit Hilfe des Drehmomentes an der Getriebeeingarigswelle kann jedoch der zeitliche Verlauf des Momentes an der Getriebeeingangswelle in Abhängigkeit von der Auslenkung und/oder der Geschwindigkeit der Auslenkung des Fahrpedals erfasst werden. Diese Information kann verwendet werden, um den Zusammenhang zwischen der Betätigung des Fahrpedals und dem zu erwartenden zeitlichen Verlauf des zur Verfügung stehenden Drehmomentes zu erfassen.

Je genauer dieser Zusammenhang bekannt ist, desto besser kann bei gegebener Fahrpedalbetätigung abgeschätzt werden, nach welchem Zeitraum das gewünschte Drehmoment an der Getriebeeingangswelle zur Verfügung steht. Dementsprechend kann unter Berücksichtigung der Totzeit der Zeitpunkt zur Ausgabe des Befehls zum Lösen der Bremse bzw. der Einrückgrad der Kupplung, ab dem dieser Befehl ausgegeben wird, bestimmt werden.

Das vorgestellte Verfahren ist grundsätzlich vorteilhaft für jedes Landfahrzeug anwendbar. Von besonderer Bedeutung ist das erfindungsgemäße Verfahren jedoch für Nutzfahrzeuge und insbesondere für Fahrzeuge zum Transport von Gütern. Da diese Fahrzeuge je nach Zuladung über ein stark schwankendes Gewicht verfügen, ist es für die Fahrer dieser Fahrzeuge oft besonders schwer, sicher und ohne ein Zurückrollen oder eine unerwünschte Arbeit des Antriebsmotors gegen die Bremse oder ein übermäßig lange schleifende Kupplung anzufahren.

## Patentansprüche

1. Verfahren zur Steuerung eines Anfahrassistenten für ein Fahrzeug mit einem Getriebe, einer automatisch steuerbaren Kupplung und einer zumindest auf ein Rad des Fahrzeugs wirkenden automatisch ansteuerbaren Bremse, welche bei Stillstand des Fahrzeugs auch unabhängig von einer Betätigung einer Betriebs- oder Feststellbremse durch den Fahrer automatisch oder manuell aktiviert werden kann, und mit einer Anfahrassistenzsteuerung, welche bei einer Aktivierung eines Betriebsmodus zum Anfahren den Einrückungsgrad der Kupplung erhöht und die Bremse löst,
**dadurch gekennzeichnet, daß** die Anfahrassistenzsteuerung derart betrieben wird,
dass derjenige Einrückgrad der Kupplung, ab dem signalisiert wird, dass die Bremse gelöst werden soll, abhängig von der aus der aktuellen Fahrpedalstellung und/oder Fahrpedalverstellgeschwindigkeit abgeleiteten Betätigungsreaktionen von Antriebsstrangaktuatoren gewählt wird.

2. Verfahren nach Anspruch 1, **dadurch gekennzeichnet, dass** die Betätigungsreaktion eines Kupplungsaktuators auf einen Kupplungsbetätigungssollwert ausgewertet wird.

3. Verfahren nach Anspruch 2, **dadurch gekennzeichnet, dass** der Kupplungsbetätigungssollwert eine Stellgeschwindigkeit oder ein Stellweg ist.

4. Verfahren nach Anspruch 1, **dadurch gekennzeichnet, dass** die Betätigungsreaktion eines Motoraktuators auf einen Motorbetätigungssollwert ausgewertet wird.

5. Verfahren nach Anspruch 4, **dadurch gekennzeichnet, dass** der Motorbetätigungssollwert eine Motordrehzahl oder ein Motordrehmoment ist.

6. Verfahren nach einem der vorherigen Ansprüche, **dadurch gekennzeichnet, dass** bei der Bestimmung desjenigen Einrückungsgrades der Kupplung, ab dem signalisiert wird, dass die Bremse gelöst werden soll, zusätzlich das aktuelle Getriebeübersetzungsverhältnis berücksichtigt wird.

7. Verfahren nach einem der vorherigen Ansprüche, **dadurch gekennzeichnet, dass** zusätzlich eine berechnete, gemessene oder eingegebene Fahrzeugmasse mit in die Bestimmung desjenigen Einrückungsgrades der Kupplung eingeht, ab dem signalisiert wird, dass die Bremse gelöst werden soll.

8. Verfahren nach einem der vorherigen Ansprüche, **dadurch gekennzeichnet, dass** zusätzlich eine Information über eine aus einem nicht waagerechten Fahrzeuguntergrund resultierende Kraft auf das Fahrzeug mit in die Bestimmung desjenigen Einrückungsgrades der Kupplung eingeht, ab dem signalisiert wird, dass die Bremse gelöst werden soll.

9. Verfahren nach einem der vorherigen Ansprüche, **dadurch gekennzeichnet, dass** zusätzlich eine Information über das Vorliegen eines Anhängerbetriebes und/oder über eine Masse eines Anhängers mit in die Bestimmung desjenigen Einrückungsgrades der Kupplung eingeht, ab dem signalisiert wird, dass die Bremse gelöst werden soll.

10. Verfahren nach einem der vorherigen Ansprüche, **dadurch gekennzeichnet, dass** zusätzlich ein berechnetes, gemessenes oder abgeschätztes Drehmoment an der Getriebeeingangswelle mit in die Bestimmung desjenigen Einrückungsgrades der Kupplung eingeht, ab dem signalisiert wird, dass die Bremse gelöst werden soll.

11. Verfahren nach einem der vorherigen Ansprüche, **dadurch gekennzeichnet, dass** zusätzlich eine Information über das Nettodrehmoment des Antriebsmotors, berechnet aus dem Bruttodrehmoment des Antriebsmotors abzüglich der Drehmomentanteile für Nebenantriebe und andere nicht vortriebswirksame Antriebsleistungsverbraucher, mit in die Bestimmung desjenigen Einrückungsgrades der Kupplung eingeht, ab dem signalisiert wird, dass die Bremse gelöst werden soll.

12. Verfahren nach einem der vorherigen Ansprüche, **dadurch gekennzeichnet, dass** zusätzlich eine Information über die tatsächlich benötigte Bremskraft an den Antriebsrädern des Fahrzeugs mit in die Bestimmung desjenigen Einrückungsgrades der Kupplung eingeht, ab dem signalisiert wird, dass die Bremse gelöst werden soll.

13. Verfahren nach Anspruch 12, **dadurch gekennzeichnet, dass** die tatsächlich benötigte Bremskraft an den Antriebsrädern von Sensoren an den Bremsvorrichtungen der Fahrzeugräder ermittelt wird.

14. Verfahren nach einem der vorherigen Ansprüche, **dadurch gekennzeichnet, dass** dieses Verfahren in einem Nutzfahrzeug und insbesondere in einem Fahrzeug zum Transport von Gütern genutzt wird.

## Claims

1. The invention relates to a method for the control of a starting assistant for a vehicle with a transmission, an automatically controllable clutch and an automatically controllable brake which acts on at least one wheel of the vehicle and which during standstill of the vehicle can be automatically or manually actuated by the driver even without actuation of a service or parking brake; and with a starting-assistance control which upon activation of a starting mode increases the degree of clutch engagement and releases the brake, **characterized in that** starting assistance control is such that the degree of clutch engagement which signals release of the brake is selected depending on the actuation response of driveline actuators to the latest accelerator-pedal position and/or accelerator-pedal adjustment speed.

2. A method according to claim 1, **characterized in that** the actuation response of a clutch actuator is set to a nominal clutch actuation value.

3. A method according to claim 2, **characterized in that** the nominal clutch actuation value is a positioning rate or a positioning travel.

4. A method according to claim 1, **characterized in that** the actuation response of an engine actuator is set to a nominal engine actuation value.

5. A method according to claim 4, **characterized in that** the nominal engine actuation value is an engine speed or an engine torque.

6. A method according to one of the preceding claims, **characterized in that** also the current transmission ratio is considered for determination of the degree of clutch engagement which signals that the brake is to be released.

7. A method according to one of the preceding claims, **characterized in that** also a calculated, measured or preset vehicle mass is considered for determination of the degree of clutch engagement which signals that the brake is to be released.

8. A method according to one of the preceding claims, **characterized in that** also the information about the force resulting from a non-horizontal track and acting on the vehicle is considered for determination of the degree of clutch engagement which signals that the brake is to be released.

9. A method according to one of the preceding claims, **characterized in that** also the information about trailer operation and/or the mass of a trailer is considered for determination of the degree of clutch engagement which signals that the brake is to be released.

10. A method according to one of the preceding claims, **characterized in that** also a calculated, measured or estimated torque on the transmission input shaft is considered for determination of the degree of clutch engagement which signals that the brake is to be released.

11. A method according to one of the preceding claims, **characterized in that** also the information about the net torque of the driving engine, calculated by deducting the torque shares for auxiliary drives and other non-propulsive consumers of propulsive power from the gross torque of the driving engine, is considered for determination of the degree of clutch engagement which signals that the brake is to be released.

12. A method according to one of the preceding claims, **characterized in that** also the information about the actually required brake force on the powered wheels of the vehicle is considered for determination of the degree of clutch engagement which signals that the brake is to be released.

13. A method according to claim 12, **characterized in that** the actually required brake force on the powered wheels is determined by sensors on the brake systems of the automotive wheels.

14. A method according to one of the preceding claims, **characterized in that** this method is used in a commercial vehicle, especially in a vehicle for the transportation of goods.

## Revendications

1. Méthode de commande d'un dispositif d'assistance au démarrage pour un véhicule doté d'une boîte de vitesses, d'un embrayage piloté automatiquement et d'un frein piloté automatiquement et agissant au moins sur une des roues du véhicule, ce frein pouvant être activé, le véhicule étant à l'arrêt, automatiquement ou manuellement par le conducteur et cela également indépendamment de l'actionnement d'un frein de service ou d'un frein de stationnement, et doté d'une unité de commande du dispositif d'assistance au démarrage, celle-ci pouvant être utilisée pour augmenter, en cas d'une activation d'un mode de fonctionnement, le degré de fermeture de l'embrayage et pour desserrer le frein, afin de pouvoir démarrer le véhicule, **caractérisée en ce que** l'unité de commande du dispositif d'assistance au démarrage fonctionne de telle façon que le degré de fermeture de l'embrayage à partir duquel est signalé que le frein doit être desserré, est sélectionné en fonction de la réaction d'actionnement d'actionneurs de la chaîne cinématique dérivée du degré et/ou de la vitesse actuels d'enfoncement de la pédale d'accélérateur.

2. Méthode selon la revendication 1, **caractérisée en ce que** la réaction d'actionnement d'un actionneur d'embrayage est exploité en fonction d'une valeur de consigne pour l'actionnement de l'embrayage.

3. Méthode selon la revendication 2, **caractérisée en ce que** la valeur de consigne pour l'actionnement de l'embrayage est une vitesse de positionnement ou une course de positionnement.

4. Méthode selon la revendication 1, **caractérisée en ce que** la réaction d'actionnement d'un actionneur d'un moteur est exploité en fonction d'une valeur de consigne pour l'actionnement d'un moteur.

5. Méthode selon la revendication 4, **caractérisée en ce que** la valeur de consigne pour l'actionnement d'un moteur est un régime moteur ou un couple moteur.

6. Méthode selon une des revendications précédentes, **caractérisée en ce que** lors de la détermination du degré de fermeture de l'embrayage à partir duquel est signalé que le frein doit être desserré, est pris en considération, en plus, le rapport de démultiplication actuel de la boîte de vitesses.

7. Méthode selon une des revendications précédentes, **caractérisée en ce que**, lors de la détermination du degré de fermeture de l'embrayage à partir duquel est signalé que le frein doit être desserré, est prise en considération, en plus, une masse de véhicule calculée, mesurée ou saisie.

8. Méthode selon une des revendications précédentes, **caractérisée en ce que**, lors de la détermination du degré de fermeture de l'embrayage à partir duquel est signalé que le frein doit être desserré, est prise en considération, en plus, une information sur la force résultante sur le véhicule lorsque le sol sur lequel se trouve le véhicule n'est pas horizontal.

9. Méthode selon une des revendications précédentes, **caractérisée en ce que**, lors de la détermination du degré de fermeture de l'embrayage à partir duquel est signalé que le frein doit être desserré, est prise en considération, en plus, une information dans le cas d'une utilisation avec remorque et/ou en cas de présence d'une masse d'une remorque.

10. Méthode selon une des revendications précédentes, **caractérisée en ce que**, lors de la détermination du degré de fermeture de l'embrayage à partir duquel est signalé que le frein doit être desserré, est prise en considération, en plus, un couple calculé, mesuré ou estimé sur l'arbre d'entrée de la boîte de vitesses.

11. Méthode selon une des revendications précédentes, **caractérisée en ce que** lors de la détermination du degré de fermeture de l'embrayage à partir duquel est signalé que le frein doit être desserré, est prise en considération, en plus, une information sur le couple net du moteur d'entraînement, calculé à partir du couple brut du moteur d'entraînement déduction faite des parts de couple pour l'entraînement de prises de mouvement et d'autres consommateurs de puissance d'entraînement participant activement à la motricité.

12. Méthode selon une des revendications précédentes, **caractérisée en ce que** lors de la détermination du degré de fermeture de l'embrayage à partir duquel est signalé que le frein doit être desserré, est prise en considération, en plus, une information sur la force de freinage effectivement nécessaire au niveau des roues motrices du véhicule.

13. Méthode selon la revendication 12, **caractérisée en ce que** la force de freinage effectivement nécessaire au niveau des roues motrices est déterminée à l'aide de capteurs positionnés sur les dispositifs de freinage des roues du véhicule.

14. Méthode selon une des revendications précédentes, **caractérisée en ce que** cette méthode est utilisée sur un véhicule utilitaire et en particulier sur un véhicule pour le transport de marchandises.
